# EUROPEAN PATENT APPLICATION

(11) **EP 1 674 891 A1**
(43) Date of publication of application: **28.06.2006**
(21) Application number: 04078492.8
(22) Date of filing: 23.12.2004
(51) Int. Cl.: G02B 1/11, B32B 27/18, C08K 7/22

(54) **Antireflection coating, process for its preparation and articles comprising same**

(71) Applicant: DSM IP Assets B.V., 6411 TE Heerlen (NL)
(72) Inventor: Currie, Edwin P. K., 6133 AM Sittard (NL)
(74) Representative: Dorrestijn, Antoon

(57) **Abstract**

A process for the preparation of a light-reflection reducing (anti-reflection) coating comprising the steps of applying a coating composition comprising hollow particles to a substrate and curing of the composition, the coating obtainable with this process and an object comprising the coating.

## Description

The invention relates to a new process for the preparation of a light reflection reducing coating, the coating and articles comprising the coating.

The drive for ever smaller features sizes in surfaces and coatings has been brought about through a desire to achieve attractive properties for applications in, for example anti-reflective coatings for displays.

A class of nano-structuring techniques to obtain light-reflection reducing coatings can be regarded as so-called bottom up techniques and are usually based on phase separation, which can be achieved in two ways. Firstly, by phase separation of two incompatible polymers (e.g. Polymethylmethacrylate and Polystyrene,Steiner et al., Science, Vol 283, pg 520-522, 1999), during the evaporation of a solvent. After that the nano-structure is formed by removal of one of the polymers by a selective solvent, that dissolves only one of the polymers.

Secondly, phase separation can be induced by crosslinking a mixture of components where at least one component is capable of crosslinking and at least one other is not(Ibn-Elhaj and Schadt, Nature, Vol 410, pg 796-799, 2001). The mixture is homogeneous prior to crosslinking and the phase separation occurs during the formation of the crosslinked network. The nano-structure is formed by removal of the non-crosslinkable component. As phase separation is a dynamic process, the size and distribution of the features formed under both of the above techniques is strongly dependent on the rate or kinetics of the phase separation. Parameters such as temperature and in the case of photo-induced crosslinking the photo-initiator concentration and/or radiation intensity all will affect the feature size of the nano-structured coatings. Therefore processing is complicated and reproducibility is poor. Also the necessary washing to remove one of the components is a sizable hurdle in the commercialisation of such technologies, especially for large surface areas.

Recently a very elegant and simple process was found for the preparation of light-reflection reducing coatings or films. The process comprises the steps of applying a mixture, comprising at least reactive nano-particles, and a solvent optionally a compound having at least one polymerisable group in an amount that is small enough to allow the formation of a nano-structured surface after cure of the formulation, to a substrate and polymerising the mixture on the substrate.

Object of the invention is to provide a coating having even further improved light-reflection reducing properties.

Surprisingly this object is obtained by a process for the preparation of a light-reflection reducing coating, comprising the steps of applying a coating composition comprising hollow particles to a substrate and curing of the composition.

A further advantage is that a very reproducible process is obtained for the application of the light-reflection reducing coating.

A light-reflection reducing coating reduces the light reflection of a substrate at at least on a wave-length between 400 and 800 nm and under normal incident angle as compared to the substrate not comprising the coating.

The hollow particles may have the shape of a balloon. Preferably the hollow particles comprise one hollow space, at least partly surrounded by a wall. Preferably the hollow space is entirely surrounded by the wall.

The hollow particles may be perfectly spherical or may have an ellipsoidal shape. In case of an ellipsoidal shape the particles have at least two radii of curvature. The largest radius may be a factor of between 1 and 5 times larger than the smallest radius.

Preferably the average smallest diameter of the spherical particles is below 100 nanometer (nm), more preferably below 50 nm, even more preferably below 20 nm, most preferably below 10 nm.

In a preferred embodiment both the smallest and the largest radius are below 10 nm. In this way a coating is obtained having very favourable optical properties, like for instance transparency, low haze etc.

The sizes of the particles may be determined by spreading a dilute suspension of the particles over a surface and measuring the sizes of individual particles by using microscopic techniques, preferably scanning electronic microscopy (SEM) or atomic force microscopy (AFM). Preferably the average sizes are determined by measuring the sizes of 100 individual particles.

Examples of suitable hollow particles and a process for their preparation is given in Chem. Commun., 2005 (Advanced Article), Synthesis of siliceous hollow spheres with large mesopore wall structure by supercritical CO2-in-water interface templating, by Jiawei Wang, Yongde Xia, Wenxin Wang, Robert Mokaya and Martyn Poliakoff, as published on the internet at 3^{rd} december 2004.

In a first embodiment the coating composition for the preparation of the light-reflection reducing coating comprises hollow particles, a solvent and further components. The particles may be either organic or inorganic by nature. Preferably inorganic particles are used as these may result in a hard coating. Most preferably silica particles are used. In a preferred embodiment hollow particles have compounds comprising chemically reactive groups grafted to their surface. Such reactive groups can form chemical bonds upon stimulation.

The compounds comprising the reactive groups may be grafted to the surface of the particles via groups for grafting. Examples of groups for grafting include silane groups, thiol groups, amine groups and silane hydride groups.

Reactive groups may be used that upon curing of the coating composition may react with the substrate and/or react to form a cross-linked phase so to form a coating comprising the particles. It is possible that a single species of reactive groups is used, able to mutually react, for example in a homo polymerisation reaction. Examples of such reactive groups include acrylate and methacrylate groups. Another possibility is that a mixture of groups is used, for example groups that are able to react in a copolymerisation reaction. Examples of such groups include carboxylic acids and/or carboxylic anhydrides combined with epoxies, acids combined with hydroxy compounds, especially 2-hydroxyalkylamides, amines combined with isocyanates, for example blocked isocyanate, uretdion or carbodiimide, epoxies combined with amines or with dicyandiamides, hydrazinamides combined with isocyanates, hydroxy compounds combined with isocyanates, for example blocked isocyanate, uretdion or carbodiimide, hydroxy compounds combined with anhydrides, hydroxy compounds combined with (etherified) methylolamide ("amino-resins"), thiols combined with isocyanates, thiols combined with acrylates or other vinylic species (optionally radical initiated), acetoacetate combined with acrylates, and when cationic cross-linking is used epoxy compounds with epoxy or hydroxy compounds. Addition reactions such as 2+2 photo cyclo addition and 4+2 thermal addition are also possible.

### Reactive diluents

In a more preferred embodiment the coating composition for the preparation of the light-reducing coating comprises one or more reactive diluents, defined as species that have at least one group capable of polymerising into a network, preferably the network formed by the particles.

In principle a wide variety of materials are suitable to be used as the reactive diluent, for example monomers or oligomers having cross-linking groups. The mixture may comprise compounds that cross-link by themselves , such as for example different acrylates or it may comprise compounds that will not cross-link by itself but which form a cross-linked phase in combination with another compound after initiation of the cross-linking reaction, for example copolymerising systems comprising electron rich and electron poor double bonds such as for example maleate/vinyl ether copolymerising systems.

Possible compounds that may be used as the reactive diluent are moisture curable isocyanates, alkoxy titanates, alkoxy zirconates, or urea-, urea/melamine-, melamine- formaldehyde or phenol-formaldehyde (resol, novolac types), or radical curable (peroxide- or photo-initiated) ethylenically unsaturated mono- and polyfunctional monomers and polymers, (acrylates, methacrylates, maleate/vinyl ether), or radical curable (peroxide- or photo-initiated) unsaturated e.g. maleic or fumaric, polyesters in styrene and/or in methacrylates.

### Method for curing

In principle any cross-linking method that may cause the composition for the preparation of the light-reducing coating to cross-link so that a cross-linked coating is formed upon curing, is suitable to be used in the process according to the invention. Suitable ways to initiate cross-linking are for example electron beam radiation, electromagnetic radiation (UV, Visible light and Near IR), thermally and by adding moisture, in case moisture curable compounds are used. In a preferred embodiment cross-linking is achieved by UV-radiation. This UV-cross-linking may take place through a free radical mechanism or by a cationic mechanism, or a combination thereof. In another preferred embodiment the cross-linking is achieved thermally. Also combinations of different cure methods are possible.

### Initiator

An initiator may be present in the mixture to initiate the cross-linking reaction. The amount of initiator may vary between wide ranges. A suitable amount of initiator is for example between above 0 and 5 wt% with respect to total weight of the compounds that take part in the cross-linking reaction.

When UV-cross-linking is used to initiate cross-linking, the mixture preferably comprises one or more UV-photo-initiators. A photo-initiator is capable of initiating a cross-linking reaction upon absorption of light. Thus, UV-photo-initiators absorb light in the Ultra-Violet region of the spectrum. Any known UV-photo-initiators may be used in the process according to the invention.

### Solvent

In principle, a wide variety of solvents may be used in the coating composition comprising the hollow particles. The solvent preferably has the ability to form stable suspensions of the particles in order to obtain good quality coatings i.e. after evaporation of the solvent. Particles typically are added to the mixture in the form of a suspension. The same solvent as used in the suspension may be used to adjust the composition so that it has the desired properties. However, other solvents may also be used.

Preferably the solvent used evaporates after applying the composition onto the substrate. In the process according to the invention, optionally the composition may after application to substrate be heated or treated in vacuum to aid evaporation of the solvent.

Examples of solvent that may be suitable are 1,4-dioxane, acetone, acetonitrile, chloroform, chlorophenol, cyclohexane, cyclohexanone, cyclopentanone, dichloromethane, diethyl acetate, diethyl ketone, dimethyl carbonate, dimethylformamide, dimethylsulphoxide, ethanol, ethyl acetate, m-cresol, mono- and di-alkyl substituted glycols, N,N-dimethylacetamide, p-chlorophenol, 1,2-propanediol, 1-pentanol, 1-propanol, 2-hexanone, 2-methoxyethanol, 2-methyl-2-propanol, 2-octanone, 2-propanol, 3-pentanone, 4-methyl-2-pentanone, hexafluoroisopropanol, methanol, methyl acetate, methyl acetoacetate, methyl ethyl ketone, methyl propyl ketone, n-methylpyrrolidone-2, n-pentyl acetate, phenol, tetrafluoro-n-propanol, tetrafluoroisopropanol, tetrahydrofuran, toluene, xylene and water. Alcohols, ketones and esters based solvents may also be used, although the solubility of acrylates may become an issue with high molecular weight alcohols. Halogenated solvents (such as dichloromethane and chloroform) and hydrocarbons (such as hexanes and cyclohexanes), may also be suitable. Preferably methanol, methyl ethyl keton or isopropanol is used.

### Adhesion promoters

The composition for the preparation of the light-reflection reducing coating, preferably comprise one or more compounds that increase the adhesion of the coating to the substrate. These may be for example silane acrylate compounds for usage of acrylate-containing coatings on an inorganic sputtered coating. The skilled artisan will be able to select a suitable adhesion promotor for the desired substrate and the processing steps necessary to obtain good adhesion.

The weight % of hollow particles in the composition, based on the total of solid components preferably is at least 50%, more preferably at least 70%, even more preferably at least 80%, most preferably at least 90%. Preferably the weight % of the hollow particles is less than 99%, more preferably less than 98%, most preferably less than 95%. In this way a coating both having favourable optical and mechanical properties is obtained.

The solid components in the coating composition are the components in the coating composition other than the solvent,.

It is also possible to use a coating composition comprising the hollow particles, a precursor for an inorganic binder and a solvent. An inorganic binder for binding the hollow particles together and to the substrate may result after the cross-linking reaction and heating of the precursor for the binder, for example an alkoxy silane, an alkyl silicate or a sodium silicate. As alkoxy silanes preferably tri and tetra alkoxy silanes are used. Due to the heating step these precursors are converted into silicon dioxide.

### Coating thickness

The light-reflection reducing coating may be prepared in any desired thickness. The coatings may have a thickness ranging between 50 nm to tens of micrometers. In the case that the coating has an optical function, for example an antireflection layer, the thickness preferably is 50-150 nm.

### Application of the composition of the light-reflection reducing coating to a substrate

The coating composition may be applied onto the substrate by one of the processes known in the art of dry and wet coating deposition in one or in multiple steps. Examples of suitable processes are spin coating, dip coating, spray coating, flow coating, meniscus coating, capillary coating and roll coating. An object may be totally coated or partially coated.

After application and curing of the coating, further processing steps such as for example a heat treatment or radiation treatment is possible.

### Objects

A wide variety of objects may be coated to obtain the object according to the invention. Suitable objects are for example flat or curved, rigid or flexible substrates including films of for example polycarbonate, polyester, polyvinyl acetate, polyvinyl pyrollidone, polyvinyl chloride, polyimide, polyethylene naphthalate, polytetrafluoro ethylene, nylon, polynorbornene or amorphous solids, for example glass or crystalline materials, such as for example silicon or gallium arsenide.

Objects according to the invention include films for use in electronic displays, but also non-electronic optical components like for example lenses, covers for instrument panels and architectures glazing.

## Claims

1. Process for the preparation of a light-reflection reducing coating comprising the steps of applying a coating composition comprising hollow particles to a substrate and curing of the composition.

2. Process according to claim 1, wherein the hollow particles have the shape of a balloon.

3. Process according to any one of claims 1 - 2, wherein the spherical hollow particles comprise one hollow space, at least partially surrounded by a wall.

4. Process according to any one of claims 1 -3, wherein the particles have an average smallest radius of curvature of smaller than 100 nm.

5. Process according to any one of claims 1 - 4, wherein the particles have an average largest and an average smallest radius of curvature below 10 nm.

6. Coating comprising the hollow particles as defined in any one of claims 1 - 5.

7. Object comprising the coating of claim 6.
